# EUROPEAN PATENT APPLICATION

(11) **EP 2 437 532 A1**
(43) Date of publication of application: **04.04.2012**
(21) Application number: 10290515.5
(22) Date of filing: 30.09.2010
(51) Int. Cl.: H04W 16/06

(54) **Apparatus and method for requesting and/or granting a radio resource**

(71) Applicant: Alcatel Lucent, 75007 Paris (FR)
(72) Inventor: Aydin, Osman, 70569 Stuttgart (DE); Fahldieck, Torsten, 71254 Ditzingen (DE); Bozo, Cesar, 70439 Stuttgart (DE)
(74) Representative: Dreiss

(57) **Abstract**

The invention relates to a base station of a cellular communications network, wherein said base station is configured to exchange data with at least one terminal via a first set of radio resources that are provided by said base station, wherein said base station comprises interface means that are configured to exchange signaling information with a further base station, wherein said signaling information comprises at least one of:
a) a resource request indicating that said base station desires to use at least a second set of radio resources, which is provided by said further base station, for said data exchange with said at least one terminal,
b) a resource grant indicating that said base station grants said first set of radio resources and/or a further set of radio resources provided by said base station for a data exchange between said further base station and at least one terminal.

## Description

### Field of the Invention

The invention relates to a base station of a cellular communications network.

The invention further relates to a method of operating a base station of a cellular communications network

### Background

Conventional base stations and corresponding methods of operating such base stations only offer a limited degree of flexibility, particularly regarding a usage of radio resources.

Accordingly, there is a need to provide a more sophisticated method of operating a base station and a base station which enables improved operational flexibility.

### summary

According to the present invention, regarding the above mentioned base station, this object is achieved by said base station comprising interface means that are configured to exchange signaling information with a further base station, wherein said signaling information comprises at least one of:
a) a resource request indicating that said base station desires to use at least a second set of radio resources, which is provided by said further base station, for said data exchange with said at least one terminal,
b) a resource grant indicating that said base station grants said first set of radio resources and/or a further set of radio resources provided by said base station for a data exchange between said further base station and at least one terminal.

The interface means according to an embodiment thus advantageously enable a sharing of radio resources between different base stations thus offering increased flexibility for the operation of said base stations.

For instance, by applying the inventive principle, a base station may request further radio resources from said further base station thus being able to offer radio service for an increased number of terminals and/or an increased bandwidth as compared to only relying on its own radio resources.

Likewise, the base station according to the embodiments may - after receiving a respective request from a further base station - grant its own radio resources (partially or even completely) to said further base station.

The interface means according to the embodiments advantageously enable a dynamic sharing of resources between respective base stations, because the signalling performed via said interface means may be done in real time, i.e. during a regular operation of said base stations.

According to a preferred embodiment, said interface means are configured to exchange user data associated with said terminal with said further base station, which advantageously enables the base station to receive user data a radio transmission of which has been performed by using the further base station's radio resources. I.e., after the further base station has granted radio resources to the base station, the further base station performs a radio transmission with the terminal using the granted radio resources. When receiving user data from said terminal via said granted radio resources, such user data may advantageously be forwarded to the base station via the interface means according to the embodiments. Thus, regardless of which radio resource (an own resource of the base station or a "borrowed" resource from the further base station) has been used, it is guaranteed that user data from the terminal is obtained by the base station for further processing.

Likewise, if said base station has granted radio resources to said further base station, corresponding user data originating at a terminal of said further base station and being received via radio resources of the base station granted to said further base station may be forwarded from said base station to the further base station via the interface means.

According to its functionality, the interface means according to the embodiments may also be interpreted as a part of a "radio resource broker", because the interface means enable a dynamic sharing of radio resources between base stations.

Radio resources in the sense of the present embodiments may be any type of resources that can be used for radio communication between a base station and one or more terminals, regardless of the direction of communication (uplink, downlink). Particularly, radio resources may comprise frequency bands and/or sub-bands and/or carrier frequencies and/or timeslots and/or code domains and the like.

According to a preferred embodiment,said interface means are configured to exchange hybrid automatic repeat request, HARQ, messages with said further base station thus enabling per se known HARQ mechanisms also for the radio resource sharing mechanisms according to the embodiments.

According to a preferred embodiment, said interface means are configured to employ a carrier aggregation, CA, mechanism as defined by Third Generation Partnership Project Long Term Evolution Release 10, 3GPP LTE Rel. 10, for exchanging said signaling information and/or said user data, whereby a particularly efficient sharing of radio resources between two base stations may be achieved.

According to a preferred embodiment,said base station and/or said further base station is a virtual base station implemented within a virtualization environment, wherein the interface means according to the embodiments may be realized in a particularly efficient manner.

However, the interface means according to the embodiments may also be provided with a base station that comprises dedicated hardware.

According to a further embodiment, said base station is configured to issue one or more resource grants to a further base station on its own initiative. I.e., the grant(s) may be issued without the base station having received a corresponding request before. For example, the base station may issue resource grants whenever it judges that a sufficient amount of its radio resources is available for its own use, so that at least a part of its radio resources can be "offered" for use to at least one further base station via the interface means and corresponding grants. If, at that time, the further base station judges it would be beneficial to use the radio resources which have initiatively been granted by the base station according to the embodiment, the further base station may advantageously use them. According to this embodiment, advantageously, requests for radio resources may be reduced or even completely avoided.

According to a further embodiment, a base station may only be configured to 1) issue a resource grant indicating that said base station grants said first set of radio resources and/or a further set of radio resources provided by said base station for a data exchange between said further base station and at least one terminal, but not to 2) issue resource requests.

According to a further embodiment, said base station is configured to issue resource grants periodically to a further base station after it gets an appropriate single request.

A further solution to the object of the present invention is given by a method of operating a base station of a cellular communications network, wherein said base station is configured to exchange data with at least one terminal via a first set of radio resources that are provided by said base station, wherein said base station comprises interface means which exchange signaling information with a further base station, wherein said signaling information comprises at least one of:
a) a resource request indicating that said base station desires to use at least a second set of radio resources, which is provided by said further base station, for said data exchange with said at least one terminal,
b) a resource grant indicating that said base station grants said first set of radio resources and/or a further set of radio resources provided by said base station for a data exchange between said further base station and at least one terminal.

Further advantageous embodiments of the invention are given in the dependent claims.

### Brief Description of the Figures

Further features, aspects and advantages of the present invention are given in the following detailed description with reference to the drawings in which:
- Figure 1: depicts a block diagram of a communications scenario according to a first embodiment,
- Figure 2: depicts a flow of messages according to the embodiment depicted by Figure 1,
- Figure 3: depicts a block diagram of a communications scenario according to a second embodiment, and
- Figure 4: depicts a block diagram of a further communications scenario according to the second embodiment.

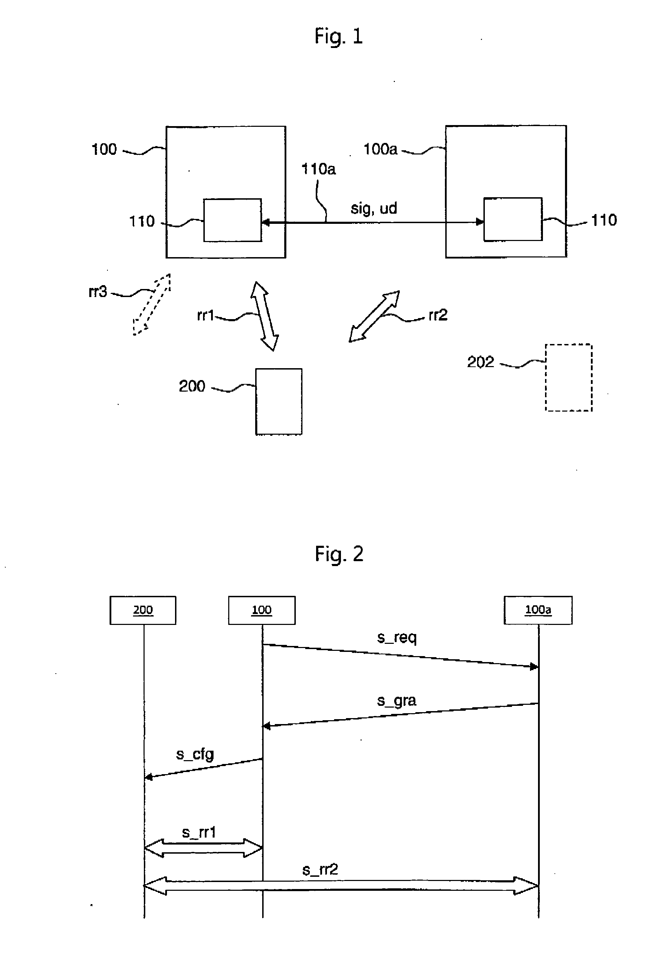

Figure 1 depicts a block diagram of a communications scenario according to a first embodiment, wherein a first base station 100 of a cellular communications system is provided. The first base station 100 maintains a radio communication with a terminal 200 via a first set rr1 of radio resources in a per se known manner.

Further, the first base station 100 may comprise at least one further set rr3 of radio resources, which may be reserved for communication with another terminal (not shown) and are thus depicted by a dashed block arrow rr3 to symbolize that this further set rr3 is not available for the communication with terminal 200.

Figure 1 also depicts a further base station 100a, which is capable of providing a second set rr2 of radio resources. According to the present embodiment, said base stations 100, 100a can be separate physical devices which may e.g. be co-located at an operator's site or which may be arranged at different places.

In order to provide an increased effective bandwidth for the terminal 200 - as compared to the bandwidth that can be provided via said set rr1 of radio resources - the first base station 100 transmits a resource request s_req to the further base station 100a via interface means 110 that are also comprised within said further base station 100a.

The interface means 110 may generally comprise any suitable communications interface such as e.g. a wired or a wireless link that enables the devices 100, 100a to exchange information with each other.

Figure 2 depicts the resource request s_req from the first base station 100 to the further base station 100a. The resource request s_req may comprise information on the type and/or amount and/or the utilization time / duration of resources requested from said further base station 100a.

After receiving the resource request s_req, the further base station 100a determines whether it currently has free radio resources it may temporarily share with the first base station 100. According to the present embodiment, the further base station 100a doesn't currently need its second set rr2 of radio resources for serving an own terminal 202, and hence, it indicates a grant of said second set rr2 of radio resources to the first base station 100 by means of the resource grant message s_gra, cf. Figure 2.

Upon receiving the grant message s_gra from the further base station 100a, the base station 100 knows that it may - at least temporarily - use the second set rr2 of radio resources which are physically provided by the further base station 100a. I.e., the further base station 100a operates a transceiver (not shown) corresponding with said second set rr2 of radio resources, but it allows the first base station 100 to use the radio resources rr2. Obviously, the grant message s_gra may comprise details on the type and/or amount of radio resources and the duration for which said radio resources are granted from the further base station 100a to the first base station 100.

To utilize the granted radio resources rr2 for the communication with its terminal 200, the first base station 200 issues a configuration message s_cfg to the terminal 200 notifying it on the possibility to also use the second set rr2 of radio resources, which are provided by the further base station 100a.

After that, the terminal 200 can exchange data with the first base station 100 by means of the first set rr1 of radio resources provided by the first base station 100 and with the further base station 100a by means of the second set rr2 of radio resources provided by the further base station 100a. The data exchange via the first set rr1 of radio resources is symbolized in Figure 2 by the block arrow s_rr1, whereas the data exchange via the second set rr2 of radio resources is symbolized in Figure 2 by the block arrow s_rr2.

The data exchanged by the terminal 200 with the further base station 100a via the second set rr2 of radio resources may advantageously be forwarded to the first base station 100 via the interface means 110. I.e., apart from exchanging signaling information sig, the interface means 110 according to the embodiments may also be employed to exchange user data information ud.

As such, the interface means 110 and a respective data transmission link 110a may provide different communications channels and may utilize various protocol layers according to the ISO/OSI reference model.

After the specific time the second set rr2 has been granted to the first base station 100, the first base station 100 may continue communicating with its terminal 200 by only employing a single set rr1 of radio resources.

In addition to requesting radio resources rr2 from the further base station 100a, the first base station 100 may - according to a further embodiment - also be configured to grant its own resources rr1, rr3 to the further base station 100a. In this case, a basically inverse signalling procedure - with respect to the signal flow of Figure 2 - via the interface means 110 is performed.

The interface means 110 according to the embodiments advantageously enable the base stations 100, 100a to at least temporarily share radio resources rr1, rr2, rr3 with other devices thus extending their capability to serve terminals. E.g., in case of overload (no own radio resources rr1, rr3 left for communicating with new arriving terminals), the first base station 100 may request further resources rr2 from the further base station 100a thus avoiding to have to reject a new terminal or drop one or more communications sessions.

According to its functionality, the interface means 110 may also be interpreted as a part of a "radio resource broker", because the interface means 110 enable a dynamic sharing of radio resources rr1, rr2, rr3 between base stations 100, 100a.

Radio resources in the sense of the present embodiments may be any type of resources that can be used for radio communication between a base station 100, 100a and one or more terminals 200, regardless of the direction of communication (uplink, downlink). Particularly, radio resources may comprise frequency bands and/or sub-bands and/or carrier frequencies and/or timeslots and/or code domains and the like.

According to a preferred embodiment,said interface means 110 are configured to exchange hybrid automatic repeat request, HARQ, messages with said further base station 100a thus enabling per se known HARQ mechanisms also for the radio resource sharing mechanisms according to the embodiments.

According to a preferred embodiment, said interface means 110 are configured to employ a carrier aggregation, CA, mechanism as defined by Third Generation Partnership Project Long Term Evolution Release 10, 3GPP LTE Rel. 10, for exchanging said signaling information and/or said user data, whereby a particularly efficient sharing of radio resources between two base stations 100, 100a may be achieved.

For example, the sets of radio resources rr1, rr2, rr3 as explained above may each form a "component carrier" (CC) in the sense of the 3GPP LTE Rel. 10 system.

According to a preferred embodiment,said base station 100 and/or said further base station 100a is a virtual base station implemented within a virtualization environment, wherein the interface means 110 according to the embodiments may be realized in a particularly efficient manner. Virtualized base stations may further profit from utilizing a common transceiver hardware which may simplify the method of radio resource sharing according to the embodiments.

However, the interface means 110 according to the embodiments may also be provided with base stations 100, 100a that comprises dedicated hardware, such as with the base stations of Figure 1 explained above.

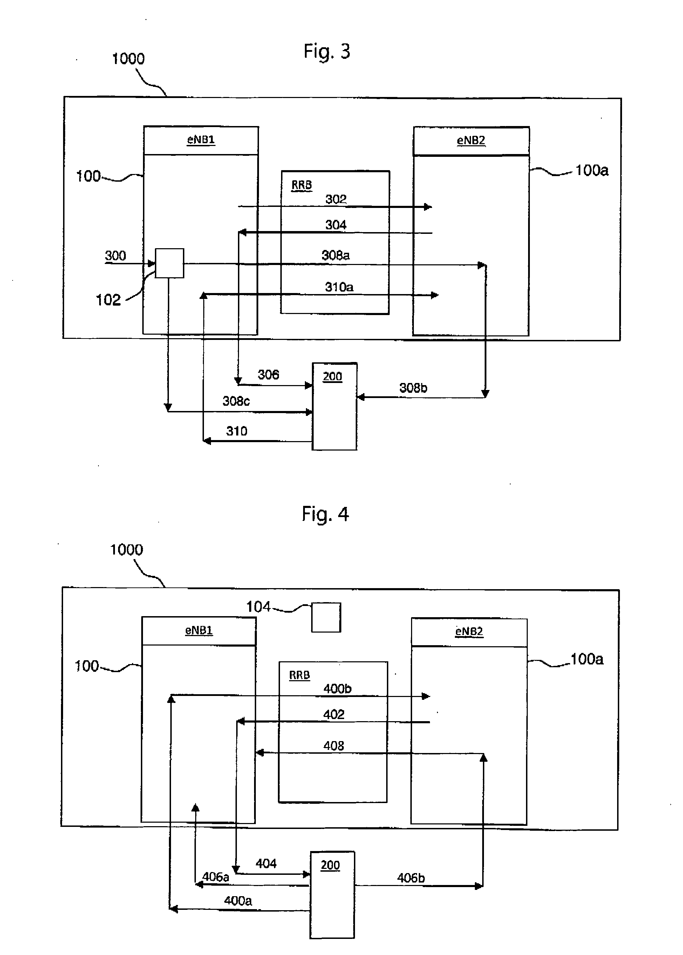

Figure 3 depicts a block diagram of a communications scenario according to a second embodiment. A virtualization environment 1000 is shown, wherein at least two virtual instances eNB1, eNB2 of base stations 100, 100a are implemented. Apart from representing virtual base stations, the instances eNB1, eNB2 are comparable in functionality to the base stations 100, 100 already explained above with reference to Figure 1.

The virtualization environment 1000 may comprise hardware and/or software and/or firmware to enable the implementation of the two virtualized base stations 100, 100a in a per se known manner. Presently, each of the two virtualized base stations 100, 100a is associated with another operator.

Additionally, a radio resource broker entity RRB is provided, which comprises functionality of the inventive interface means 110 explained above and which thus enables the virtualized base stations 100, 100a to exchange signaling information sig (Figure 1) and user data information ud.

More generally, the radio resource broker RRB is configured to provide a standardized exchange of needed information for spectrum sharing (and/or sharing of other radio resources) between the two base stations eNB1, eNB2.

Especially, as far as signaling data is concerned, the radio resource broker RRB exchanges information between the respective schedulers (not shown) of the base stations eNB1 eNS2, if one of them requests radio resources from the other base station.

According to an embodiment, the radio resource broker RRB advantageously also transfers ACK/NACK signaling for transmitted user data handling.

As far as user data ud is concerned, the radio resource broker RRB forwards said user data ud to the respective schedulers.

According to a further embodiment, the radio resource broker RRB can derive billing information from granted resources by evaluating the signaling information exchanged via the interface means 110, i.e. the radio resource broker RRB. Thus, both base station's operators can analyze to what extent radio resources have been shared with the other operator's base station eNB1, eNB2.

With reference to Figure 3, a data exchange procedure for radio resource sharing according to the embodiments is described below with focus on a downlink data transmission.

Advantageously, Carrier Aggregation techniques as defined by 3GPP LTE Rel. 10 are employed.

In a first step 300, downlink (DL) data arrives at the first base station eNB1, e.g. an incoming call for its terminal 200.

After that, the first base station eNB1 issues a DL Resource Request 302 via its interface means 110, i.e. the resource broker functionality, to the second base station eNB2. For example, the operator of the first base station eNB1 may decide to go with an additional carrier (SCC, secondary component carrier) of a cell managed by the second base station eNB2 to dispose the DL data for the terminal 200 and thus asks the second base station eNB2 for corresponding resources on its cell, cf. arrow 302.

After checking availability of radio resources, the second base station eNB2 grants the requested resources and transmits a corresponding grant message 304 to the first base station eNB1. Advantageously, the operator of the second base station eNB2 provides the parameters of the offered grant to the first base station eNB1 (like size/time/frequency/availability/TTL).

After that, the first base station informs its terminal 200 about the new radio resource conditions on the cell of the second operator which is served by the second base station eNB2. This is done via a respective configuration message 306 to the terminal 200, said message 306 configuring the SCC if this has not already done in a procedure before, e.g. a former DL transmission with the same radio resource configuration. Moreover, in step 306, the radio resource on the PCC (primary component carrier) is signalled via PDCCH, and the radio resource on the SCC is signalled via CTF (carrier indicator field) information according to the Carrier Aggregation mechanism as defined by 3GPP LTE Rel. 10.

In another step, the DL data is forwarded. For this purpose, data partitioning means 102 partition the DL data in portions, wherein a first DL data portion 308a is forwarded to the terminal 200 via said RRB, the second base station eNB2, and finally the radio resources of the second base station eNB2, cf. arrow 308b.

A second DL data portion 308c is forwarded to the terminal 200 by the first base station eNB1 itself in a conventional manner, i.e. via its own radio resources.

The partitioning performed in block 102 may e.g. be performed depending on a promised grant size received in step 304 from the second base station eNB2.

The DL data transmission 308b, 308c is preferably performed at a time defined by the PDCCH with CIF from the step 306 of configuring the new radio resource configuration.

In step 310, bundled HARQ ACK/NACK response messages from the terminal 200 are transmitted to the cell maintained by the first base station eNB1. The bundled HARQ ACK/NACK messages contain information from which cell (PCell or SCell), i.e. via which radio resource, successful or not successful data reception was performed at the terminal 200.

After receiving the bundled HARQ ACK/NACK messages, the first base station eNB1 deletes or retransmits its own "send DL data" buffer according received ACK/NACK 310 and forwards the ACK/NACK information relevant for the SCC, i.e. the radio resources of the second base station eNB2, to the second base station for corresponding processing.

Preferably, for a NACK case, the first base station eNB1 has to allocate again radio resources in the cell of the second base station eNB2 according to the steps already described above.

Preferably, for an ACK case, the second base station eNB2 deletes its HARQ process and user data in the "send DL data" buffer, because it has successfully been sent.

With reference to Figure 4, a data exchange procedure for radio resource sharing according to the embodiments is described below with focus on an uplink data transmission.

Advantageously, Carrier Aggregation techniques as defined by 3GPP LTE Rel. 10 are employed.

In a first step, the terminal 200 sends an uplink (UL) resource request 400a to the first base station eNB1. The scheduler (not shown) of eNB1 decides according to the amount of requested data to request for additional UL resources from the second base station eNB2, cf. arrow 400b which represents a corresponding request via the interface means 110 or the radio resource broker entity RRB, respectively.

In a further step 402, the second base station eNB2 grants uplink resources to the first base station eNB1.

Thus, the first base station eNB1 sends a UL grant message 404 to the terminal 200 which contains grant information both on radio resources of eNB1 and eNS2.

After receiving the grants, the terminal sends UL data according to the received grants on radio resources of eNB1 and eNB2, cf, arrows 406a, 406b.

The second base station eNB2 forwards the received UL data 406b to the first base station eNB1, cf. arrow 408. Finally the UL data transfer conditions / parameters may be recorded in a billing database 104 associated with said base stations eNB1, eNB2.

The embodiments explained above advantageously enable a new concept of sharing radio resources. The principle of the interface means 110 and the functionality of the radio resource broker entity RRB may particularly be applied in LTE, UMTS (W-CDMA) or other radio networks, preferably in such networks which support carrier aggregation.

The embodiments advantageously enable several base stations' operators to share their available resources such as e.g. an available spectrum.

A further advantage of the inventive principle is that the radio resources from a further base station 100a are provided to the terminal 200 transparently. This may especially be done via the already available feature of Carrier Aggregation (CA) (e.g. as defined in 3GPP LTE Rel10). The provisioning of radio resources may be based on the available physical radio resources and a spectrum sharing agreement between the base stations or operators who share the spectrum or other radio resources.

According to a further embodiment, the base station 100 (Figure 1) is configured to issue one or more resource grants s_gra to a further base station 100a on its own initiative. I.e., the grant(s) s_gra may be issued without the base station 100 having received a corresponding request s_req before. For example, the base station 100 may issue resource grants s_gra whenever it judges that a sufficient amount of its radio resources is available for its own use, so that at least a part of its radio resources can be "offered" for use to at least one further base station 100a via the interface means 110 and corresponding grants. If, at that time, the further base station 100a judges it would be beneficial to use the radio resources which have initiatively been granted by the base station 100, the further base station 100a may advantageously use them. According to this embodiment, advantageously, requests s_req for radio resources may be reduced or even completely avoided.

According to a further embodiment, a base station may only be configured to 1) issue a resource grant indicating that said base station grants said first set of radio resources and/or a further set of radio resources provided by said base station for a data exchange between said further base station and at least one terminal, but not to 2) issue resource requests. According to this embodiment, the base station may potentially share its resources with other base stations, but does not request radio resources from other base stations itself.

The inverse case, of course, is also possible, wherein a base station may potentially request resources from a further base station, but does not share its own resources with other base stations.

According to a further embodiment, said base station 100 is configured to issue resource grants s_gra periodically to a further base station 100a after it gets an appropriate single request s_req from said further base station 100a.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

The functions of the various elements shown in the FIGs., including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. Base station (100) of a cellular communications network, wherein said base station (100) is configured to exchange data with at least one terminal (200) via a first set (rr1 of radio resources that are provided by said base station (100), wherein said base station (100) comprises interface means (110) that are configured to exchange signaling information (sig) with a further base station (100a), wherein said signaling information comprises at least one of:
a) a resource request (s_req) indicating that said base station (100) desires to use at least a second set (rr2) of radio resources, which is provided by said further base station (100a), for said data exchange with said at least one terminal (200),
b) a resource grant (s_gra) indicating that said base station grants said first set of radio resources and/or a further set of radio resources provided by said base station for a data exchange between said further base station and at least one terminal.

2. Base station (100) according to claim 1, wherein said interface means (110) are configured to exchange user data (ud) associated with said terminal (200) with said further base station (100a).

3. Base station (100) according to one of the preceding claims, wherein said interface means (110) are configured to exchange hybrid automatic repeat request, HARQ, messages with said further base station (100a).

4. Base station (100) according to one of the preceding claims, wherein said interface means (110) are configured to employ a carrier aggregation, CA, mechanism as defined by Third Generation Partnership Project Long Term Evolution Release 10, 3GPP LTE Rel. 10, for exchanging said signaling information (sig) and/or said user data (ud).

5. Base station (100) according to one of the preceding claims, wherein said base station (100) and/or said further base station (100a) is a virtual base station implemented within a virtualization environment.

6. Base station (100) according to one of the preceding claims, wherein said base station (100) is configured to issue one or more resource grants (s_gra) to a further base station on its own initiative.

7. Base station (100) according to one of the preceding claims, wherein said base station (100) is configured to issue resource grants (s_gra) periodically to a further base station (100a) after it gets an appropriate single request (s_req).

8. Method of operating a base station (100) of a cellular communications network, wherein said base station (100) is configured to exchange data with at least one terminal (200) via a first set (rr1) of radio resources that are provided by said base station (100), wherein said base station (100) comprises interface means (110) which exchange signaling information (sig) with a further base station (100a), wherein said signaling information comprises at least one of:
a) a resource request (s_req) indicating that said base station (100) desires to use at least a second set (rr2) of radio resources, which is provided by said further base station (100a), for said data exchange with said at least one terminal (200),
b) a resource grant (s_gra) indicating that said base station grants said first set of radio resources and/or a further set of radio resources provided by said base station for a data exchange between said further base station and at least one terminal.

9. Method according to claim 8, wherein said base station (100) exchanges user data (ud) associated with said terminal (200) with said further base station (100a) by means of said interface means (110).

10. Method according to claim 8 or 9, wherein said interface means (110) exchange hybrid automatic repeat request, HARQ, messages with said further base station (100a).

11. Method according to one of the claims 8 to 10, wherein said interface means (110) employ a carrier aggregation, CA, mechanism as defined by Third Generation Partnership Project Long Term Evolution Release 10, 3GPP LTE Rel. 10, for exchanging said signaling information (sig) and/or said user data (ud).

12. Method according to one of the claims 8 to 11, wherein said base station (100) and/or said further base station (100a) is a virtual base station implemented within a virtualization environment.

13. Method according to one of the claims 8 to 12, wherein a duration and/or size and/or lifetime and/or further parameters of granted radio resources are collected in a billing database (104).
